(19)

**Europäisches Patentamt**
**European Patent Office**
**Office européen des brevets**

(11) **EP 4 538 756 A1**

(12) **EUROPEAN PATENT APPLICATION**

(43) Date of publication:
**16.04.2025 Bulletin 2025/16**

(21) Application number: **24185449.6**

(22) Date of filing: **28.06.2024**

(51) International Patent Classification (IPC):
**G02B 5/30** *(2006.01)*      **G02B 27/00** *(2006.01)*
**G02B 27/01** *(2006.01)*

(52) Cooperative Patent Classification (CPC):
**G02B 27/0018; G02B 5/3083; G02B 27/0172;**
G02B 2027/012

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.10.2023 KR 20230134651**

(71) Applicant: **Samsung Display Co., Ltd.**
**Yongin-si, Gyeonggi-do 17113 (KR)**

(72) Inventors:
• **KIM, Dae Won**
  **17113 Yongin-si (KR)**

• **KIM, Su Jeong**
  **17113 Yongin-si (KR)**
• **SON, Jong Ho**
  **17113 Yongin-si (KR)**
• **SHIN, Hye Beom**
  **17113 Yongin-si (KR)**
• **LEE, Kyung Hee**
  **17113 Yongin-si (KR)**
• **LEE, Jin Hyeong**
  **17113 Yongin-si (KR)**
• **CHANG, Sun Young**
  **17113 Yongin-si (KR)**

(74) Representative: **Taor, Simon Edward William et al**
**Venner Shipley LLP**
**200 Aldersgate**
**London EC1A 4HD (GB)**

(54) **LENS ASSEMBLY AND DISPLAY DEVICE INCLUDING THE SAME**

(57)    A lens assembly including an incident side on which light is incident and an exit side opposite to the incident side, includes: a first polarization layer disposed adjacent to the incident side; a second polarization layer disposed between the first polarization layer and the exit side; a phase retardation layer disposed between the first polarization layer and the second polarization layer. The phase retardation layer has a first phase retardation refractive index along a first direction, has a second phase retardation refractive index equal to the first phase retardation refractive index along a second direction, and has a third phase retardation refractive index along a third direction perpendicular to the first direction and the second direction, and the first phase retardation refractive index and the second phase retardation refractive index are different from the third phase retardation refractive index.

**EP 4 538 756 A1**

## Description

BACKGROUND

(1) Field

The disclosure relates to a lens assembly and a display device including the lens assembly.

(2) Description of the Related Art

As information technology has developed, the importance of a display device, which is a connection medium between a user and information, has been highlighted. Accordingly, the use of display devices such as a liquid crystal display device, an organic light emitting display device, and the like has been increasing.

Recently, as a type of display device, a head mounted display (HMD) has been developed. The head mounted display is a display device that is worn on the user's head and provides images, and is currently commercially available and is being widely applied in various fields, including the entertainment industry.

For example, the head mounted display may be used in various applications such as virtual reality (VR) and augmented reality (AR).

Recently, methods to improve the display quality of the head mounted display are continuously being studied. For example, methods to reduce ghost images are being studied to provide users with virtual reality and augmented reality that are closer to reality.

SUMMARY

Embodiments of the disclosure provide a lens assembly and a display device including the lens assembly that may improve display quality.

An embodiment of the disclosure provides a lens assembly including an incident side on which the light is incident and an exit side opposite to the incident side, where the lens assembly includes: a first polarization layer disposed adjacent to the incident side; a second polarization layer disposed between the first polarization layer and the exit side; a phase retardation layer disposed between the first polarization layer and the second polarization layer; a first quarter wave plate disposed between the second polarization layer and the exit side; a partially reflective mirror layer disposed between the first quarter wave plate and the exit side; a second quarter wave plate disposed between the partially reflective mirror layer and the exit side; and a third polarization layer disposed adjacent to the exit side. In such an embodiment, the phase retardation layer has a first phase retardation refractive index along a first direction, has a second phase retardation refractive index equal to the first phase retardation refractive index along a second direction, and has a third phase retardation refractive index along a third direction perpendicular to the first direction and the second direction, and the first phase retardation refractive index and the second phase retardation refractive index are different from the third phase retardation refractive index.

In an embodiment, the phase retardation layer may include a material having refractive index anisotropy.

In an embodiment, the phase retardation layer may have a phase retardation value ($R_{th}$) in a range of about 500 nm to about 1500 nm with respect to visible light. In such an embodiment, the phase retardation value ($R_{th}$) of the phase retardation layer satisfies the following equation: $R_{th}=\{(N_X+N_Y)/2-N_Z\} \times d)$, where $N_X$ denotes the first phase retardation refractive index, $N_Y$ denotes the second phase retardation refractive index, $N_z$ denotes the third phase retardation refractive index, and d denotes a thickness of the phase retardation layer.

In an embodiment, the material having the refractive index anisotropy may include a discotic material or a liquid crystal material.

In an embodiment, the first to third phase retardation refractive indices may range of about 1.5 to about 1.9.

In an embodiment, the phase retardation layer may change a polarization state of light incident in a direction different from the third direction, and the first direction and the second direction may be directions on a plane on which the phase retardation layer is disposed.

In an embodiment, light transmission axes of the first polarization layer and the second polarization layer may be parallel to each other.

In an embodiment, the first polarization layer may be a linear polarization layer.

In an embodiment, the first polarization layer may be in a film form.

In an embodiment, the first polarization layer and the phase retardation layer may be spaced apart from each other.

In an embodiment, a material having a refractive index isotropy may be disposed between the first polarization layer and the phase retardation layer.

In an embodiment, the lens assembly may further include an adhesive layer disposed between the first polarization layer and the phase retardation layer, where the phase retardation layer may be coupled to the first polarization layer through the adhesive layer.

In an embodiment, the phase retardation layer and the first polarization layer may be in contact with each other.

In an embodiment, the phase retardation layer may be a layer formed on the first polarization layer through a coating or deposition process.

Another embodiment of disclosure provides a display device including: a display panel including a base layer disposed on a plane defined based on a first direction and a second direction different from the first direction, and a light emitting element disposed on the base layer; and a lens assembly disposed on the display panel, where the lens assembly includes an incident side adjacent to the display panel and an exit side opposite to the incident side. In such an embodiment, the lens assembly includes a first polarization layer disposed adjacent to the incident side; a second polarization layer disposed between the first polarization layer and the exit side; a phase retardation layer disposed between the first polarization layer and the second polarization layer; a first quarter wave plate disposed between the second polarization layer and the exit side; a partially reflective mirror layer disposed between the first quarter wave plate and the exit side; a second quarter wave plate disposed between the partially reflective mirror layer and the exit side; and a third polarization layer disposed adjacent to the exit side. In such an embodiment, the phase retardation layer has a first phase retardation refractive index along the first direction, has a second phase retardation refractive index equal to the first phase retardation refractive index along the second direction, and has a third phase retardation refractive index along a third direction perpendicular to the first direction and the second direction, and the first phase retardation refractive index and the second phase retardation refractive index are different from the third phase retardation refractive index.

In an embodiment, the phase retardation layer may have a phase retardation value ($R_{th}$) in a range of about 500 nm to about 1500 nm with respect to visible light. In such an embodiment, the phase retardation value ($R_{th}$) of the phase retardation layer satisfies the following equation: $R_{th}=\{(N_X+N_Y)/2-N_Z\} \times d)$, where $N_X$ denotes the first phase retardation refractive index, $N_Y$ denotes the second phase retardation refractive index, Nz denotes the third phase retardation refractive index, and d denotes a thickness of the phase retardation layer.

In an embodiment, the phase retardation layer may include a material having refractive index anisotropy, and the phase retardation layer may change a polarization state of light incident in a direction different from the third direction.

In an embodiment, light transmission axes of the first polarization layer, the second polarization layer, and the third polarization layer may be parallel to each other.

Another embodiment of the disclosure provides a lens assembly configured to guide light and including an incident side on which the light is incident and an exit side opposite to the incident side, the lens assembly including: a first polarization layer disposed between the first polarization layer and the incident side; a second polarization layer disposed adjacent to the exit side; a phase retardation layer disposed between the first polarization layer and the second polarization layer. In such an embodiment, the phase retardation layer has a first phase retardation refractive index along a first direction, has a second phase retardation refractive index equal to the first phase retardation refractive index along a second direction, and has a third phase retardation refractive index along a third direction perpendicular to the first direction and the second direction, and the first phase retardation refractive index and the second phase retardation refractive index are different from the third phase retardation refractive index.

In an embodiment, the phase retardation layer may have a phase retardation value ($R_{th}$) in a range of about 500 nm to about 1500 nm with respect to visible light. In such an embodiment, the phase retardation value ($R_{th}$) of the phase retardation layer satisfies the following equation: $R_{th}=\{(N_X+N_Y)/2-N_Z\} \times d)$, where $N_X$ denotes the first phase retardation refractive index, $N_Y$ denotes the second phase retardation refractive index, Nz denotes the third phase retardation refractive index, and d denotes a thickness of the phase retardation layer.

According to an aspect, there is provided a lens assembly as set out in claim 1. Additional features are set out in claims 2 to 14. According to an aspect, there is provided a display device as set out in claim 15.

According to embodiment of the disclosure, it is possible to provide a lens assembly and a display device including the lens assembly that may improve display quality.

BRIEF DESCRIPTION OF THE DRAWINGS

FIG. 1 schematically illustrates a display device according to an embodiment.
FIG. 2 illustrates a schematic top plan view of a display panel according to an embodiment.
FIG. 3 illustrates a schematic cross-sectional view of a lens assembly according to an embodiment.
FIG. 4 schematically illustrates light paths of side light and front light emitted from a display panel.
FIG. 5A to FIG. 5F illustrate TECH WIZ 1D simulation results of exit light according to the presence or absence of a phase retardation layer and a phase retardation value of the phase retardation layer.
FIG. 6 schematically illustrates a path in which a light path is folded.
FIG. 7 illustrates a schematic cross-sectional view of an optical assembly according to another embodiment.
FIG. 8 illustrates a schematic cross-sectional view of an optical assembly according to another embodiment.
FIG. 9 and FIG. 10 schematically illustrate embodiments of an electronic device to which the display device of FIG. 1 may be applied.
FIG. 11 schematically illustrates an embodiment of a head mounted display worn on a user.

DETAILED DESCRIPTION

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. Thus, reference to "an" element in a claim followed by reference to "the" element is inclusive of one element and a plurality of the elements. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, a lens assembly and a display device including the lens assembly according to embodiments will be described with reference to the accompanying drawings.

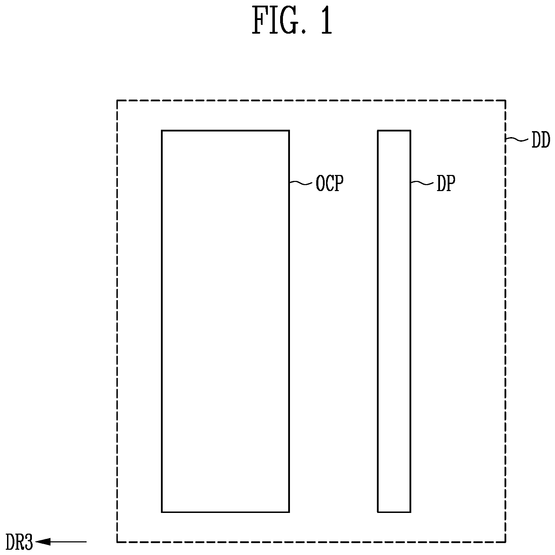

First, a configuration included in a display device DD will be briefly described with reference to FIG. 1.

FIG. 1 schematically illustrates a display device according to an embodiment.

In an embodiment, the display device DD may include a display panel DP and a lens assembly OCP.

The display panel DP is configured to emit light. In some embodiments, the display panel DP may display a moving image or a still image. The display panel DP may be used as a display screen of a portable electronic device such as a mobile phone, a smart phone, a tablet personal computer (PC), a smart watch, a watch phone, a mobile communication terminal, an electronic note, an electronic book, a portable multimedia players (PMP), a navigation device, and an ultra mobile PC (UMPC), and may be used as display screens of various products such as a television set, a laptop computer, a monitor, a billboard, an Internet of things (IOT). However, the application field of the display panel DP is not limited to a specific example.

The lens assembly OCP may transmit light provided from the display panel DP. The lens assembly OCP may guide light provided from the display panel DP. The lens assembly OCP may guides the light provided from the display panel DP to increase an area (viewing window or eye box) where the user may observe the image. Accordingly, the lens assembly OCP may effectively provide virtual reality or augmented reality to the user.

The lens assembly OCP may be disposed on the display panel DP. In some embodiments, the lens assembly OCP may be disposed to be spaced apart from the display panel DP by a predetermined distance. In some embodiments, the lens assembly OCP may be disposed directly on the display panel DP.

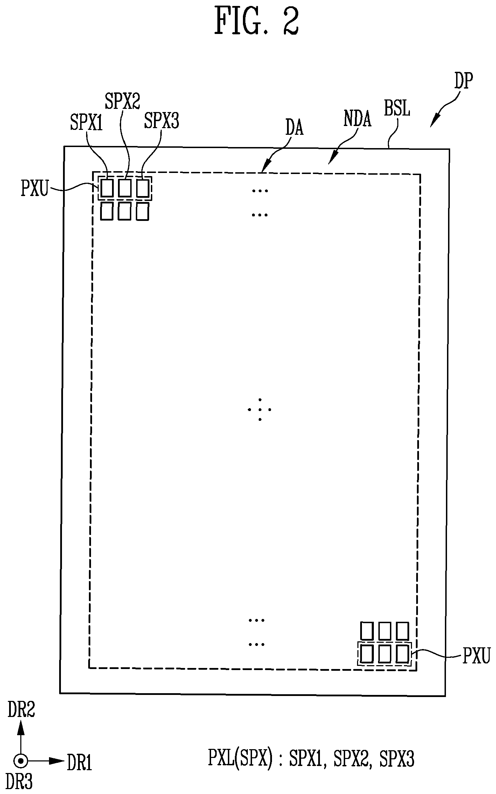

Hereinafter, the display panel DP of the display device DD will be described with reference to FIG. 2.

FIG. 2 illustrates a schematic top plan view of a display panel according to an embodiment.

Referring to FIG. 2, an embodiment of the display panel DP includes a base layer BSL on a plane defined based on a first direction DR1 and a second direction DR2 intersecting the first direction DR1, and a light emitting element disposed on the base layer BSL.

The display panel DP may be formed as a flat shape having a rectangular shape having a short side in the first direction DR1 and a long side in the second direction DR2 intersecting the first direction DR1, which is different from the first direction DR1. A corner at which the short side of the first direction DR1 and the long side of the second direction DR2 meet may be rounded to have a predetermined curvature or may be formed to have a right angle. The flat shape of the display panel DP of embodiments is not limited to a quadrangular shape, and may be formed in a round shape such as another polygonal, circular, or elliptical shape. The display panel DP may be formed to be flat, but embodiments are not limited thereto. In an embodiment, for example, the display panel DP may include curved portions that are formed at left and right ends and have a constant curvature or a variable curvature. In addition, the display panel DP may be flexibly formed to be bent, curved, folded, or rolled.

In the disclosure, the first direction DR1 is a row direction of pixels PXL, which may also be referred to as a "horizontal" direction. The second direction DR2 may be a column direction of the pixels PXL, which may also be referred to as a "vertical" direction. The first direction DR1 and the second direction DR2 may be perpendicular to each other. A third direction DR3 may be a display direction of the display panel DP or a normal direction of the plane on which the base layer BSL is disposed. The third direction DR3 may be a thickness direction of the display panel DP or the base layer BSL

The display panel DP may include a display area DA and a non-display area NDA. The non-display area NDA may mean an area other than the display area DA. The non-display area NDA may surround at least a portion of the display area DA.

The display area DA may mean an area in which the pixels PXL are disposed. The non-display area NDA may mean an area in which the pixel PXL is not disposed. In the non-display area NDA, a driving circuit portion, wires, and pads connected to the pixel PXL of the display area DA may be disposed.

In some embodiments, the pixel PXL (or sub-pixels SPX) may include a first sub-pixel SPX1, a second sub-pixel SPX2, and third sub-pixel SPX3. At least one selected from the first sub-pixel SPX1, the second sub-pixel SPX2, and the third sub-pixel SPX3 may form or collectively define one pixel unit PXU capable of emitting light of various colors. FIG. 2 illustrates an embodiment where each of the pixels PXL includes three sub-pixels SPX1, SPX2, and SPX3, that is, a first sub-pixel SPX1, a second sub-pixel SPX2, and third sub-pixel SPX3, but embodiments of the invention are not limited thereto.

In some embodiments, the pixel PXL (or the sub-pixels SPX) may be arranged according to a stripe or PENTILE™ arrangement structure. However, the disclosure is not necessarily limited thereto.

The first sub-pixel SPX1 may emit first light, the second sub-pixel SPX2 may emit second light, and the third sub-pixel SPX3 may emit third light. Here, the first light may be light of a red wavelength band, the second light may be light of a green wavelength band, and the third light may be light of a blue wavelength band. The red wavelength band is a wavelength band of about 600 nanometers (nm) to about 750 nm, the green wavelength band is a wavelength band of about 480 nm to about 560 nm, and the blue wavelength band may be a wavelength band of about 370 nm to about 460 nm, but embodiments are not limited thereto.

Each of the first sub-pixel SPX1, the second sub-pixel SPX2, and the third sub-pixel SPX3 may include an inorganic light emitting element or an organic light emitting diode (OLED) including an inorganic semiconductor as a light emitting element that emits light. However, the embodiments of the specification are not limited thereto.

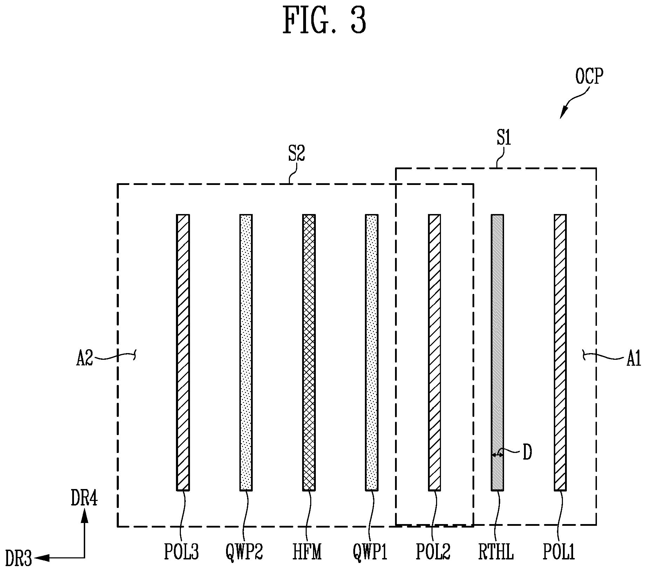

Hereinafter, a lens assembly OCP according to an embodiment will be described with reference to FIG. 3 to FIG. 6.

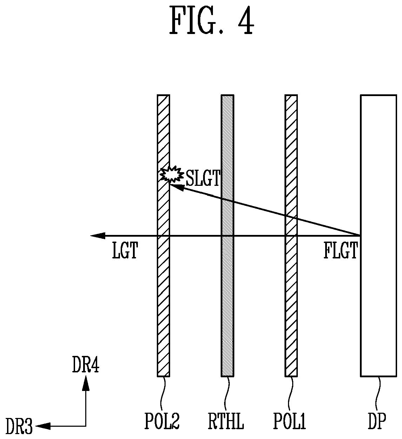

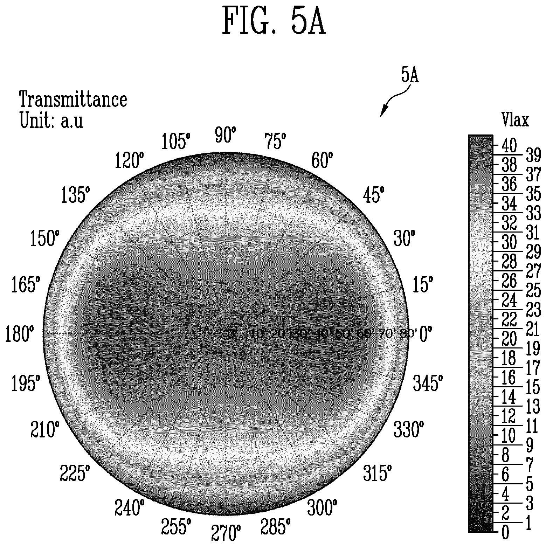

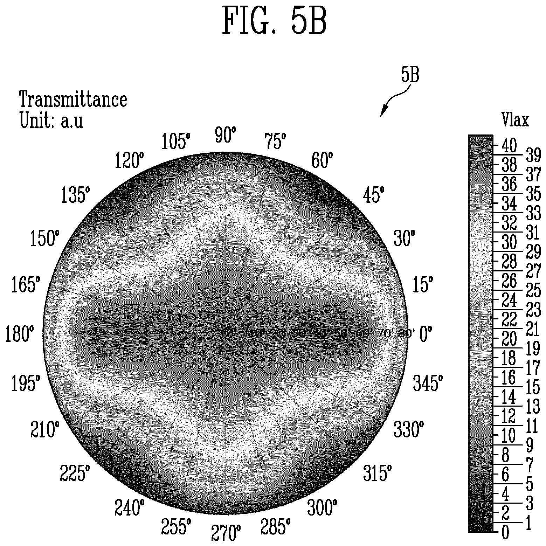

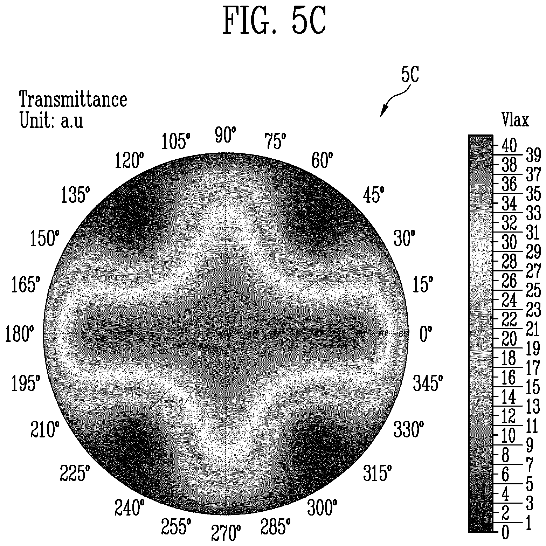

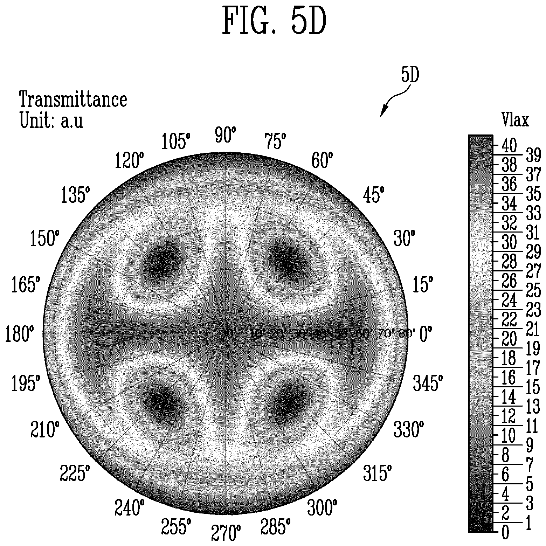

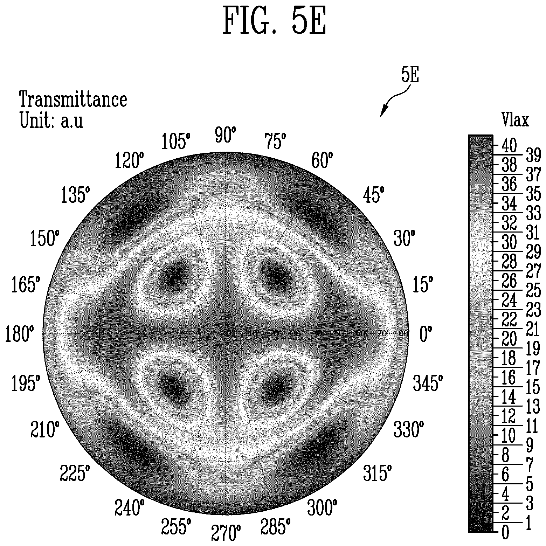

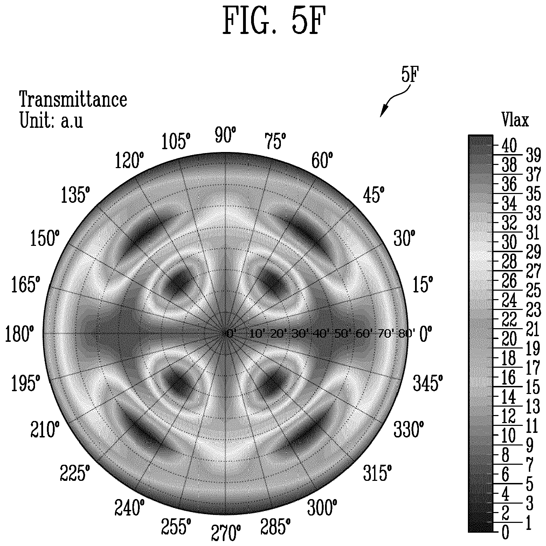

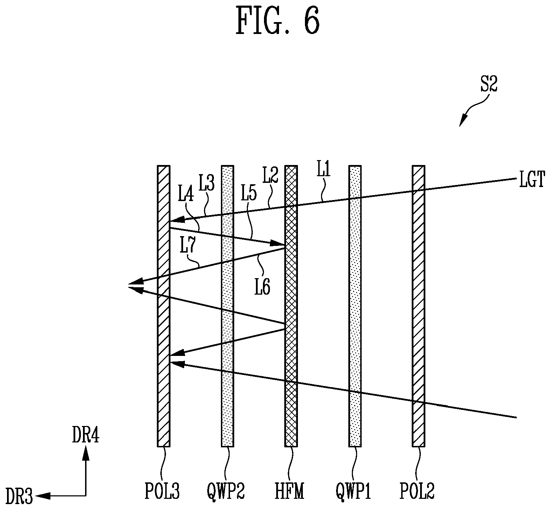

FIG. 3 illustrates a schematic cross-sectional view of a lens assembly according to an embodiment. FIG. 4 schematically illustrates light paths of side light and front light emitted from a display panel. FIG. 4 illustrates an area S1 of FIG. 3 and a display panel DP. FIG. 5A to FIG. 5F illustrate TECH WIZ 1D simulation results of exit light according to the presence or absence of a phase retardation layer and a phase retardation value of the phase retardation layer. FIG. 6 schematically illustrates a path in which a light path is folded. FIG. 6 illustrates an area S2 of FIG. 3.

For reference, TECH WIZ is one of the optical simulation programs known in the art.

Referring to FIG. 3, the lens assembly OCP may include an incident side A1 that may be disposed adjacent to the display panel DP in the third direction DR3, and an exit side A2 that is opposite to the incident side A1.

The lens assembly OCP may include a first polarization layer POL1, a phase retardation layer RTHL, a second polarization layer POL2, a first quarter wave plate QWP1, a partially reflective mirror layer HFM, a second quarter wave plate QWP2, and a third polarization layer POL3. In some embodiments, the lens assembly OCP may have a structure in which the first polarization layer POL1, the phase retardation layer RTHL, the second polarization layer POL2, the first quarter wave plate QWP1, the partially reflective mirror layer HFM, the second quarter wave plate QWP2, and the third polarization layer POL3 are sequentially disposed.

In the drawings of the disclosure, the components of the lens assembly OCP are shown to have flat surfaces and the cross-section thereof is shown to has the quadrangular shape, but embodiments of the disclosure are not limited thereto. In some embodiments, each of the components of the lens assembly OCP may have a concave or convex surface, and the cross-section thereof may be concave or convex.

In an embodiment of the lens assembly OCP, the first polarization layer POL1 may be disposed on the display panel DP with respect to the third direction DR3. The first polarization layer POL1 may be disposed adjacent to the incident side A1. In an embodiment, for example, the first polarization layer POL1 may be disposed closer to the display panel DP than the second polarization layer POL2. In some embodiments, the first polarization layer POL1 and the display panel DP may be physically spaced apart from each other. The first polarization layer POL1 and the display panel DP may not be in contact with each other. However, embodiments of the disclosure are not limited thereto. In an embodiment, the first polarization layer POL1 may be disposed directly on the display panel DP to be in contact with the display panel DP.

The first polarization layer POL1 may have a transmission axis (or a passing axis) aligned along a predetermined direction. For example, the first polarization layer POL1 may have a transmission axis aligned along a fourth direction DR4, which is a direction perpendicular to the third direction DR3. The fourth direction DR4 may be parallel to the first direction DR1 or the second direction DR2. The first polarization layer POL1 may be a linear polarization layer. The first polarization layer POL1 may linearly polarize unpolarized or partially polarized light emitted from the display panel DP.

In an embodiment, for example, the first polarization layer POL1 may transmit only a component of light that vibrates along the transmission axis of the first polarization layer POL1 and may not transmit the remaining components of the light. Accordingly, as the light emitted from the display panel DP passes through the first polarization layer POL1, the light may be aligned with the transmission axis of the first polarization layer POL1 and be linearly polarized.

The second polarization layer POL2 may be disposed on the first polarization layer POL1 with respect to the third direction DR3. The second polarization layer POL2 may be disposed between the exit side A2 and the first polarization layer POL1. The second polarization layer POL2 may be disposed to be further apart from the incident side A1 than the first polarization layer POL1. For example, the second polarization layer POL2 may be disposed closer to the exit side A2 than the first polarization layer POL1. The second polarization layer POL2 may be disposed to be further apart from the display panel DP than the first polarization layer POL1.

The second polarization layer POL2 may have a transmission axis (or a passing axis) aligned along a predetermined direction. The second polarization layer POL2 may have a transmission axis in the same direction as the first polarization layer POL1. In an embodiment, for example, the second polarization layer POL2 may have a transmission axis aligned along the fourth direction DR4. The second polarization layer POL2 may be a linear polarization layer. The second polarization layer POL2 may linearly polarize the light passing through the second polarization layer POL2. For example, the second polarization layer POL2 may transmit only a component of light that vibrates along the transmission axis of the second polarization layer POL2 and may not transmit the remaining components of the light.

The phase retardation layer RTHL may be disposed on the first polarization layer POL1 with respect to the third direction DR3. The phase retardation layer RTHL may be disposed adjacent to the first polarization layer POL1. The phase retardation layer RTHL may be disposed between the first polarization layer POL1 and the second polarization layer POL2. The phase retardation layer RTHL may be disposed to be spaced apart from the first polarization layer POL1 and the second polarization layer POL2 and disposed therebetween. The phase retardation layer RTHL may be in non-contact with the first polarization layer POL1 and the second polarization layer POL2.

A refractive index isotropic material may be filled between the phase retardation layer RTHL and the first polarization layer POL1, and between the phase retardation layer RTHL and the second polarization layer POL2. In an embodiment, for example, air may be filled between the phase retardation layer RTHL and the first polarization layer POL1, and between the phase retardation layer RTHL and the second polarization layer POL2.

The phase retardation layer RTHL may have a phase retardation value in a numerical range. The phase retardation value may be represented by Equation 1 below.

$$[Equation\ 1]$$
$$R_{th}=\{(N_X+N_Y)/2-N_Z\} \times d$$

In Equation 1, $R_{th}$ denotes a phase retardation value of the phase retardation layer RTHL, $N_X$ denotes a refractive index of the phase retardation layer RTHL in the first direction DR1, $N_Y$ denotes a refractive index of the phase retardation layer RTHL in the second direction DR2, Nz denotes a refractive index of the phase retardation layer RTHL in the third direction DR3, and d denotes a thickness D of the phase retardation layer RTHL.

In the disclosure, the thickness is defined in the third direction DR3, and the first direction DR1 and second direction DR2 are the same as the direction in which the plane where the phase retardation layer RTHL is disposed extends. In addition, $N_X$, $N_Y$, and Nz in Equation 1 are defined as a first phase retardation refractive index, a second phase retardation refractive index, and a third phase retardation refractive index, respectively. The phase retardation layer RTHL may have a first phase retardation refractive index $N_X$ along the first direction DR1. The phase retardation layer RTHL may have a second phase retardation refractive index $N_Y$ along the second direction DR2. The phase retardation layer RTHL may have a third phase retardation refractive index Nz along the third direction DR3.

The first phase retardation refractive index $N_X$ and the second phase retardation refractive index $N_Y$ are refractive indices of the plane (for example, the plane on which the phase retardation layer RTHL is disposed) of the phase retardation layer RTHL, and may have a same value as each other. The third phase retardation refractive index Nz is a refractive index in the thickness direction (for example, the third direction DR3) and may have a different value from the first phase retardation refractive index $N_X$ and the second phase retardation refractive index $N_Y$. The third phase retardation refractive index Nz may have an anisotropic refractive index with respect to the first phase retardation refractive index $N_X$ and the second phase retardation refractive index $N_Y$. Accordingly, a polarization state of light incident on the phase retardation layer RTHL may be changed by forming an angle with respect to the third direction DR3 (or along a direction different from the third direction DR3).

In some embodiments, each of the first phase retardation refractive index, the second phase retardation refractive index, and the third phase retardation refractive index may be in a range of about 1.5 to about 1.9. However, embodiments of the disclosure are not limited thereto.

The phase retardation layer RTHL may have a phase retardation value in a range of about 500 nm to about 1500 nm with respect to visible light (for example, light with a wavelength of about 400 nm to about 700 nm). The phase retardation value may be determined depending on process conditions. For example, when a liquid crystal with "$(N_X+N_Y)/2-N_Z$" having a value of about 0.15 is vertically oriented and the phase retardation layer RTHL has a thickness of about 3.5 micrometers ($\mu$m), the phase retardation value may be about 525 nm ($=0.15\times3.5\mu$m).

The phase retardation layer RTHL may include a material having refractive index anisotropy. In an embodiment, for example, the material having the refractive index anisotropy may include a liquid crystal material. In an embodiment, for example, the material having the refractive index anisotropy may include a reactive mesogen. In an embodiment, for example, the material having the refractive index anisotropy may include a discotic material (for example, a discoid mesogen).

In some embodiments, the phase retardation layer RTHL may be a film layer. The phase retardation layer RTHL may be a single film.

Referring to FIG. 4, the display panel DP (for example, a light emitting element of the display panel DP) may emit light similar to a Lambertian distribution, and the light emitted from the display panel DP may include front light FLGT and side light SLGT.

Experimentally, when the display device DD is implemented as a head-mounted display, the front light FLGT and the side light SLGT emitted from the display panel DP may form an image for providing virtual reality and augmented reality to the user. For example, the front light FLGT and the side light SLGT emitted from the display panel DP may pass through the lens assembly OCP and form an image in front of the user's eyes.

The front light FLGT is light emitted in a direction perpendicular to the display panel DP and may be parallel to the third direction DR3. The side light SLGT is light emitted in a direction that is not perpendicular to the display panel DP, and may be emitted in a direction that forms an angle with respect to the third direction DR3.

Experimentally, when the display device DD is implemented as a head mounted display, the front light FLGT may be light that forms a focus in front of the user's eyes, and may be chief ray angle (CRA) light entering the user's viewing angle (or Eye Box). The side light SLGT may form a ghost image to provide a virtual image to the user, and may cause the light emitted from the light emitting element to be mixed because it may not form an appropriate focus.

The display device DD according to an embodiment of the disclosure may minimize the loss of the front light FLGT while appropriately minimizing the amount of the side light SLGT emitted outside the lens assembly OCP. Accordingly, the display quality of the display device DD may be improved.

When the front light FLGT is emitted from the display panel DP, passes through the first polarization layer POL1, and passes through the phase retardation layer RTHL, the front light FLGT is parallel to the third direction DR3, so that the front light FLGT may pass without changing separate light information. That is, when the front light FLGT passes through the phase retardation layer RTHL, the front light FLGT may pass through the phase retardation layer RTHL without changing the polarization state thereof. Accordingly, since the polarization state of the front light FLGT that has passed through the phase retardation layer RTHL is not changed, the front light FLGT may pass through the second polarization layer POL2. Hereinafter, the light passing through the second polarization layer POL2 is defined as "second polarization layer passing light LGT."

In such an embodiment, when the side light SLGT is emitted from the display panel DP, passes through the first polarization layer POL1 and the phase retardation layer RTHL, since the side light SLGT is incident at an angle with respect to the third direction DR3, the polarization state may be changed depending on the phase retardation value. That is, when the side light SLGT passes through the phase retardation layer RTHL, the polarization state of the side light SLGT may be changed. Accordingly, among components of the side light SLGT whose polarization state has changed after passing through the phase retardation layer RTHL, components that does not vibrate along the transmission axis of the second polarization layer POL2 may be blocked by the second polarization layer POL2. In other words, the polarization state of the side light SLGT may be changed by passing through the phase retardation layer RTHL, and at least a portion of the side light SLGT vibrating in a direction different from the transmission axis of the second polarization layer POL2 may not be allowed to transmit through the second polarization layer POL2.

In this regard, simulation results of optical information according to the presence or absence of the phase retardation layer RTHL and the phase retardation value of the phase retardation layer RTHL will be described with reference to FIG. 5A to FIG. 5F. FIG. 5A to FIG. 5F illustrate TECH WIZ 1D simulation results of exit light according to the presence or absence of the phase retardation layer RTHL and a phase retardation value of the phase retardation layer RTHL. Hereinafter, the simulation results illustrated in FIG. 5A to FIG. 5F are defined as first to sixth images 5A to 5F, respectively.

In FIG. 5A to FIG. 5F, the first image 5A is a simulation result of light emitted from the lens assembly OCP in which the phase retardation layer RTHL is not provided. The second image 5B is a simulation result of light emitted from the lens assembly OCP in which the phase retardation layer RTHL is disposed to have a phase retardation value of 300 nm. The third image 5C is a simulation result of light emitted from the lens assembly OCP in which the phase retardation layer RTHL is disposed to have a phase retardation value of 500 nm. The fourth image 5D is a simulation result of light emitted from the lens assembly OCP in which the phase retardation layer RTHL is disposed to have a phase retardation value of 1000 nm. The fifth image 5E is a simulation result of light emitted from the lens assembly OCP in which the phase retardation layer RTHL is disposed to have a phase retardation value of 1500 nm. The sixth image 5F is a simulation result of light emitted from the lens assembly OCP in which the phase retardation layer RTHL is disposed to have a phase retardation value of 1800 nm.

These images show the viewing angle distribution for each transmittance of light. Transmittance of light corresponds to Vlax shown on the right for each brightness and darkness, and the unit of transmittance is a.u. (arbitrary unit).

Comparing the first image 5A with the second to sixth images 5B to 5F, it may be seen that the first image 5A has dark result values (for example, values of Vlax 30 to 40) in a relatively large area corresponding to the center when compared with the second to sixth images 5B to 5F. In the TECH WIZ 1D simulation results, the relatively dark result values corresponding to the values of Vlax 30 to 40 are widely distributed in the central area, which means that the emission degree of the side light SLGT from the exit light is large. That is, comparing the first image 5A with the second to sixth images 5B to 5F, it can be seen that more side light SLGT may be generated in the lens assembly OCP in which the phase retardation layer RTHL is not disposed.

Comparing the second image 5B with the third image 5C, it may be seen that the second image 5B has dark result values in a relatively large area when compared with the third image 5C. This may be because when the phase retardation value of the phase retardation layer RTHL is less than 500 nm, only a small amount of the side light SGLT in the exit light is blocked. Experimentally, when only a small amount of the side light SGLT in the exit light is blocked, ghost images may be frequently formed. Therefore, when the phase retardation layer RTHL is formed to have a phase retardation value of less than 500 nm, only a small amount of the side light SGLT is blocked, so that the ghost images may be frequently formed.

Comparing the fifth image 5E with the sixth image 5F, it can be seen that the sixth image 5F has relatively narrow dark result values (for example, values of Vlax 0 to 5) in the area adjacent to the edge area in the diagonal direction when compared to the fifth image 5E. Experimentally, a decrease in the dark portion (for example, an area with values of Vlax 0 to 5) in the edge area may mean that the luminance of the exit light is decreased. Accordingly, this may indicate that when the phase retardation value of the phase retardation layer RTHL exceeds 1500 nm, the luminance of the display device DD may be excessively reduced. As a result, when the phase retardation layer RTHL is formed to have a phase retardation value exceeding 1500 nm, the luminance of the display device DD may be excessively reduced to deteriorate the quality of the display device DD.

Therefore, it is desired to design or set the phase retardation layer RTHL by selecting an appropriate range of phase retardation values that may properly block the side light SLGT without excessively decreasing luminance.

Referring to FIG. 3 and FIG. 6, in an embodiment of the lens assembly OCP, the first quarter wave plate QWP1 may be disposed on the second polarization layer POL2 with respect to the third direction DR3. The first quarter wave plate QWP1 may be disposed adjacent to the second polarization layer POL2. The first quarter wave plate QWP1 may be disposed between the second polarization layer POL2 and the exit side A2. In some embodiments, the first quarter wave plate QWP1 may be physically spaced apart from the second polarization layer POL2. The first quarter wave plate QWP1 may not contact the second polarization layer POL2.

The first quarter wave plate QWP1 may have an optical axis aligned at about 45 degrees with respect to the transmission axes of the first polarization layer POL1 and the second polarization layer POL2. The first quarter wave plate QWP1 may change linearly polarized light into circularly polarized light or change circularly polarized light into linearly polarized light by providing a phase difference of $\lambda/4$. In an embodiment, for example, when the second polarization layer passing light LGT is linearly polarized light of 0°, and when the second polarization layer passing light LGT passes through the first quarter wave plate QWP1, the second polarization layer passing light LGT may become left-circularly polarized (LCP) first light L1. In some embodiments, when the second polarization layer passing light LGT passes through the first quarter wave plate QWP1, the second polarization layer passing light LGT may be right-circularly polarized (RCP), but in the disclosure, for convenience, an embodiment in which the second polarization layer passing light LGT is left-circularly polarized will be mainly described.

A refractive index isotropic material may be filled between the first quarter wave plate QWP1 and the second polarization layer POL2. In an embodiment, for example, air may be filled between the first quarter wave plate QWP1 and the second polarization layer POL2.

The partially reflective mirror layer HFM may be disposed on the first quarter wave plate QWP1 with respect to the third direction DR3. The partially reflective mirror layer HFM may be disposed adjacent to the first quarter wave plate QWP1. The partially reflective mirror layer HFM may be disposed between the first quarter wave plate QWP1 and the exit side A2. In some embodiments, the partially reflective mirror layer HFM may be physically spaced from the first quarter wave plate QWP1. The partially reflective mirror layer HFM may not contact the first quarter wave plate QWP1.

The partially reflective mirror layer HFM may include a metallic mirror coating, or other mirror coating, such as a dielectric multilayer coating that is 50 % transparent and 50 % reflective, on a surface thereof.

At least a portion of the first light L1 may pass through the partially reflective mirror layer HFM to become second light L2. The polarization states of the first light L1 and the second light L2 may be the same as each other.

An isotropic refractive index material (or a material having refractive index isotropy) may be filled between the partially reflective mirror layer HFM and the first quarter wave plate QWP1. In an embodiment, for example, air may be filled between the partially reflective mirror layer HFM and the first quarter wave plate QWP1.

The second quarter wave plate QWP2 may be disposed on the partially reflective mirror layer HFM with respect to the third direction DR3. The second quarter wave plate QWP2 may be disposed adjacent to the partially reflective mirror layer HFM. The second quarter wave plate QWP2 may be disposed between the partially reflective mirror layer HFM and the exit side A2. In some embodiments, the second quarter wave plate QWP2 may be physically spaced from the partially reflective mirror layer HFM. The second quarter wave plate QWP2 may not be in contact with the partially reflective mirror layer HFM.

The second quarter wave plate QWP2 may provide a phase difference of $\lambda/4$ to vertically polarize the second polarization layer passing light LGT. The second polarization layer passing light LGT may be vertically polarized to become third light L3. For example, when the second polarization layer passing light LGT is linearly polarized light of 0° with respect to the transmission axes of the first polarization layer POL1 and the second polarization layer POL2, the second polarization layer passing light LGT may pass through the first and second quarter wave plates QWP1 and QWP2 to be polarized into linearly polarized light of 90° with respect to the transmission axes of the first polarization layer POL1 and the second polarization layer POL2.

A refractive index isotropic material may be filled between the second quarter wave plate QWP2 and the partially reflective mirror layer HFM. In an embodiment, for example, air may be filled between the second quarter wave plate QWP2 and the partially reflective mirror layer HFM.

The third polarization layer POL3 may be disposed on the second quarter wave plate QWP2 with respect to the third direction DR3. The third polarization layer POL3 may be disposed adjacent to the exit side A2. The third polarization layer POL3 may be disposed adjacent to the second quarter wave plate QWP2. In some embodiments, the third polarization layer POL3 may be physically spaced from the second quarter wave layer QWP2. The third polarization layer POL3 may not be in contact with the second quarter wave plate QWP2.

A refractive index isotropic material may be filled between the third polarization layer POL3 and the second quarter wave plate QWP2. In an embodiment, for example, air may be filled between the third polarization layer POL3 and the second quarter wavelength plate QWP2.

The third polarization layer POL3 may have a transmission axis (or a passing axis) aligned along a predetermined direction. In an embodiment, for example, the third polarization layer POL3 may have a transmission axis aligned along the fourth direction DR4. The third polarization layer POL3 may be a reflective polarization layer. In an embodiment, for example, the third polarization layer POL3 may transmit only a component of light that vibrates along the transmission axis of the third polarization layer POL3 and may reflect the remaining components of the light.

Accordingly, when the second polarization layer passing light LGT is linearly polarized light of 0° with respect to the transmission axes of the first polarization layer POL1 and the second polarization layer POL2 and the third light L3 is linearly polarized light of 90° with respect to the transmission axes of the first polarization layer POL1 and the second polarization layer POL2, the third light L3 may be reflected from the third polarization layer POL3 to become fourth light L4.

The fourth light L4 may pass through the second quarter wave plate QWP2 again to be right circularly polarized. The right circularly polarized fifth light L5 may be reflected from the partially reflective mirror layer HFM. In this case, when the circularly polarized light is reflected, the phase may be changed by 180°, and the right circularly polarized fifth light L5 may be reflected from the partially reflective mirror layer HFM to become left circularly polarized sixth light L6. The left circularly polarized sixth light L6 may pass through the second quarter wave plate QWP2 again to become seventh light L7 that is linearly polarized light of 0° with respect to the transmission axes of the first polarization layer POL1 and the second polarization layer POL2.

As a result, the second polarization layer passing light LGT and the seventh light L7 may have a same polarization value or state, and the seventh light L7 may pass through the third polarization layer POL3.

In an embodiment, as described above, the light path may be folded while the light emitted from the display panel DP passes through the second polarization layer POL2, the first quarter wave plate QWP1, the partially reflective mirror layer HFM, the second quarter wave plate QWP2, and the third polarization layer POL3, and the light path may be increased by a distance between the third polarization layer POL3 and the partially reflective mirror layer HFM. Accordingly, the lens assembly OCP may be formed to be closer in focus than a case in which the lens assembly OCP does not include the second polarization layer POL2, the first quarter wave plate QWP1, the partially reflective mirror layer HFM, the second quarter wave plate QWP2, and the third polarization layer POL3, and the thickness of the display device DD may be reduced.

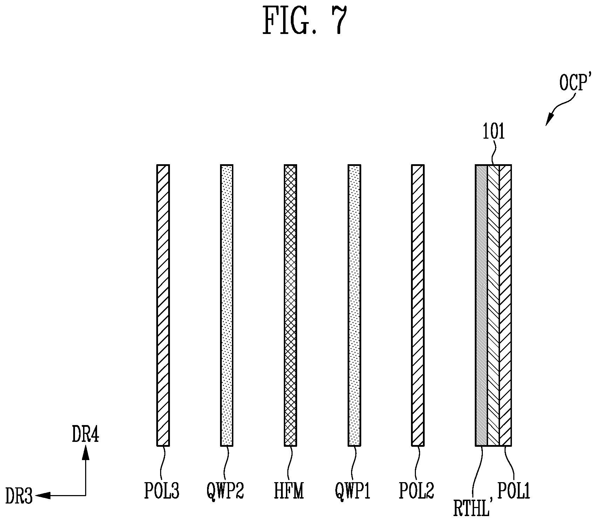

Hereinafter, an optical assembly OCP' according to another embodiment will be described with reference to FIG. 7. FIG. 7 illustrates a schematic cross-sectional view of an optical assembly according to another embodiment.

The optical assembly OCP' shown in FIG. 7 is substantially the same as the optical assembly OCP shown in FIG. 3 except that a phase retardation layer RTHL' may be adhered (or bonded) to the first polarization layer POL1 through an adhesive layer 101. However, the position of the phase retardation layer RTHL' of embodiments is not limited thereto, and in some embodiments, the phase retardation layer RTHL' may be adhered to a lower portion of the second polarization layer POL2 through the adhesive layer 101. For convenience of description, any repetitive detailed description of the same or like elements as those described above will be omitted or simplified.

In an embodiment, as shown in FIG. 7, the phase retardation layer RTHL' may be adhered to the first polarization layer POL1 through the adhesive layer 101 to form a phase retardation film attached to the first polarization layer POL1.

The adhesive layer 101 may include an optically isotropic material.

The adhesive layer 101 may include a flexible material. In some embodiments, the flexible material may include at least one selected from polyimide, polyethylene terephthalate, and polyethylene phthalate.

The adhesive layer 101 may include at least one selected from a press sensitive adhesive (PSA) and an optical clear adhesive (OCA). However, embodiments of the disclosure are not limited thereto.

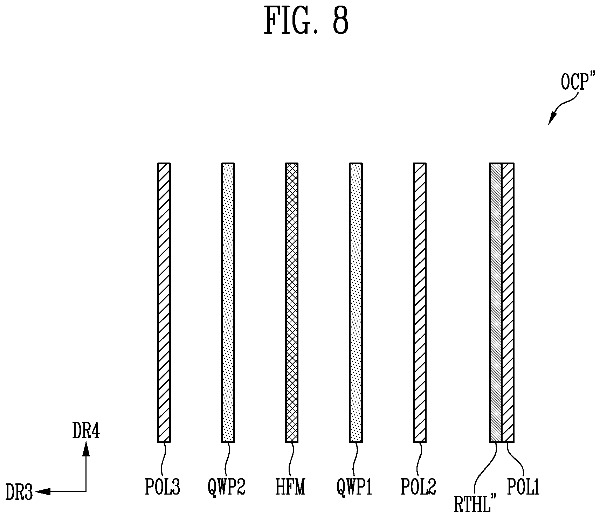

Hereinafter, an optical assembly OCP" according to another embodiment will be described with reference to FIG. 8. FIG. 8 illustrates a schematic cross-sectional view of an optical assembly according to another embodiment.

The optical assembly OCP" shown in FIG. 8 is substantially the same as the optical assembly OCP shown in FIG. 3 except that a phase retardation layer RTHL" is directly disposed on the first polarization layer POL1. However, the position of the phase retardation layer RTHL" of embodiments is not limited thereto, and in some embodiments, the phase retardation layer RTHL" may be directly disposed below the second polarization layer POL2

For convenience of description, any repetitive detailed description of the same or like elements as those described above will be omitted or simplified.

In an embodiment, as shown in FIG. 8, the phase retardation layer RTHL" may be directly disposed on the first polarization layer POL1 through a coating or deposition process.

In an embodiment, for example, the phase retardation layer RTHL" may be disposed by directly coating or depositing a material having a phase retardation value in a range of about 500 nm to about 1500 nm on the first polarization layer POL1.

The coating or deposition process may be performed by methods commonly used in the art. In an embodiment, for example, one or more of the coating processes such as a spin coating, a roller coating, a bar coating method, a dip coating method, a gravure coating method, a curtain coating method, a die coating method, a spray coating method, a doctor coating method, and a kneader coating method may be used. In an embodiment, for example, one or more of the deposition processes, such as a printing process such as a screen printing method, a spray printing method, an inkjet printing method, an iron plate printing method, a urinary plate printing method, and a flat plate printing method; and chemical vapor deposition (CVD), physical vapor deposition (PVD), and plasma enhanced chemical vapor deposition (PECVD), may be used.

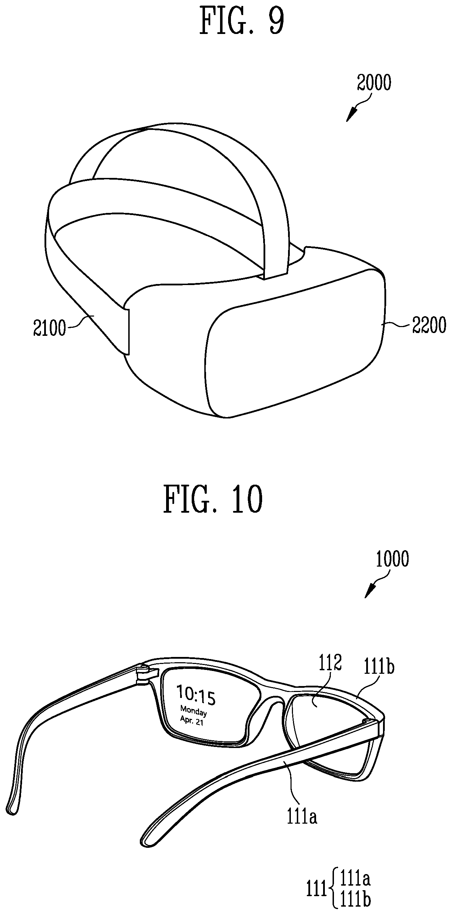

FIG. 9 and FIG. 10 schematically illustrate embodiments of an electronic device to which the display device of FIG. 1 may be applied.

Referring to FIG. 9, an embodiment of the display device may be implemented as a head mounted display. A head mounted display 2000 may be a wearable electronic device that may be worn on the user's head. The head mounted display 2000 may include a head mounted band 2100 and a display device accommodation case 2200.

The head mounted band 2100 may be connected to the display device accommodation case 2200 to fix the display device accommodation case 2200. The head mounted band 2100, as shown in FIG. 9, includes a horizontal band and a vertical band for fixing the head mounted display to the user's head, the horizontal band may surround a side portion of the user's head, and the vertical band may surround an upper portion of the user's head. However, embodiments of the disclosure are not necessarily limited thereto, and the head mounted band 2100 may be implemented in the form of a glasses frame or a helmet.

Referring to FIG. 10, an embodiment of the display device may be implemented as a smart glass 1000 as another form of a head mounted display. The smart glass 1000 may include a frame 111 and a lens portion 112. The smart glass 1000 is a wearable electronic device that may be worn on a user's face, and may have a structure in which a portion of the frame 111 is folded or unfolded. For example, the smart glass 1000 may be a wearable device for augmented reality. However, embodiments of the disclosure are not limited thereto.

The frame 111 may include a housing 111b supporting the lens portion 112 and a leg portion 111a for a user to wear. The leg portion 111a may be coupled to the housing 111b by a hinge to be folded or unfolded.

A battery, a touch pad, a microphone, and/or a camera may be embedded in the frame 111. In addition, a projector that outputs light and/or a processor that controls an optical signal and the like may be embedded in the frame 111.

The lens portion 112 may be an optical member that transmits light or reflects light. The lens portion 112 may include glass and/or a transparent synthetic resin.

The display device DD may be applied to the lens portion 112 of the smart glass 1000. For example, the user may recognize an image displayed by an optical signal transmitted from the projector of the frame 111 through the lens portion 112. For example, the user may recognize information such as time and date displayed on the lens portion 112.

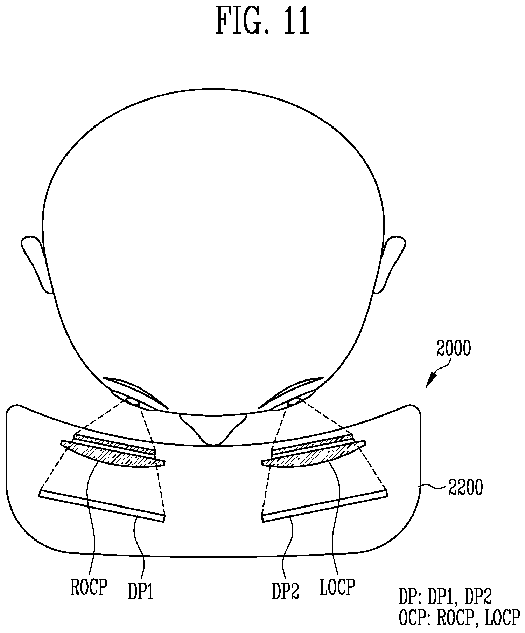

FIG. 11 schematically illustrates an embodiment of a head mounted display worn on a user.

Referring to FIG. 11, a first display panel DP1 and a second display panel DP2 are disposed in the head mounted display 2000. The head mounted display 2000 may further include one or more lenses LOCP and ROCP. The lenses LOCP and ROCP may correspond to the lens assembly OCP described above. The head mounted display 2000 shown in FIG. 11 may correspond to the embodiment shown in FIG. 9.

In the display device accommodation case 2200, the right eye lens ROCP may be disposed between the first display panel DP1 and the right eye of the user. In the display device accommodation case 2200, the left eye lens LOCP may be disposed between the second display panel DP2 and the left eye of the user.

An image output from the first display panel DP1 may be shown to the right eye of the user through the right eye lens ROCP. The right eye lens ROCP may refract light from the first display panel DP1 to be directed to the right eye of the user. The right eye lens ROCP may perform an optical function to adjust the viewing distance between the first display panel DP1 and the right eye of the user.

An image output from the second display panel DP2 may be shown to the left of the user through the left eye lens LOCP. The left eye lens LOCP may refract light from the second display panel DP2 to be directed to the left eye of the user. The left eye lens LOCP may perform an optical function to adjust the viewing distance between the second display panel DP2 and the left eye of the user.

In embodiments, each of the right eye lens ROCP and the left eye lens LOCP may include an optical lens having a pancake-shaped cross section. The optical lenses having the pancake-shaped cross section may include the second polarization layer POL2, the first quarter wave plate QWP1, the partially reflective mirror layer HFM, the second quarter wave plate QWP2, and the third polarization layer POL3.

In embodiments, each of the right eye lens ROCP and the left eye lens LOCP may include a multi-channel lens including sub-areas with different optical characteristics. In such embodiments, each display panel outputs images corresponding to the sub-areas of the multi-channel lens, and the output images may pass through the sub-areas and be viewed by the user.

As discussed, embodiments may provide a lens assembly including an incident side on which light is incident and an exit side opposite to the incident side, the lens assembly comprising: a first polarization layer disposed adjacent to the incident side; a second polarization layer disposed between the first polarization layer and the exit side; a phase retardation layer disposed between the first polarization layer and the second polarization layer, the phase retardation layer has a first phase retardation refractive index along a first direction, has a second phase retardation refractive index equal to the first phase retardation refractive index along a second direction, and has a third phase retardation refractive index along a third direction perpendicular to the first direction and the second direction, and the first phase retardation refractive index and the second phase retardation refractive index are different from the third phase retardation refractive index.

The phase retardation layer includes a material having refractive index anisotropy. The material having the refractive index anisotropy may include a discotic material or a liquid crystal material.

The phase retardation layer may include a material having refractive index anisotropy. The phase retardation layer may change a polarization state of light incident in a direction different from the third direction.

Embodiments may provide a lens assembly including an incident side on which light is incident and an exit side opposite to the incident side, the lens assembly comprising: a first polarization layer disposed adjacent to the incident side; a second polarization layer disposed between the first polarization layer and the exit side; a phase retardation layer disposed between the first polarization layer and the second polarization layer; a first quarter wave plate disposed between the second polarization layer and the exit side; a partially reflective mirror layer disposed between the first quarter wave plate and the exit side; a second quarter wave plate disposed between the partially reflective mirror layer and the exit side; and a third polarization layer disposed adjacent to the exit side, wherein the phase retardation layer has a first phase retardation refractive index along a first direction, has a second phase retardation refractive index equal to the first phase retardation refractive index along a second direction, and has a third phase retardation refractive index along a third direction perpendicular to the first direction and the second direction, and wherein the first phase retardation refractive index and the second phase retardation refractive index are different from the third phase retardation refractive index.

Embodiments may provide a display device comprising: a display panel including a base layer disposed on a plane defined based on a first direction and a second direction different from the first direction, and a light emitting element disposed on the base layer; and a lens assembly disposed on the display panel, wherein the lens assembly transmits light provided from the display panel, and the lens assembly includes an incident side adjacent to the display panel and an exit side opposite to the incident side, wherein the lens assembly is according to any of the above mentioned embodiments.

The invention should not be construed as being limited to the embodiments set forth herein. Rather, these embodiments are provided so that this disclosure will be thorough and complete and will fully convey the concept of the invention to those skilled in the art.

While the invention has been particularly shown and described with reference to embodiments thereof, it will be understood by those of ordinary skill in the art that various changes in form and details may be made therein without departing from the scope of the invention as defined by the following claims.

## Claims

1. A lens assembly including an incident side on which light is incident and an exit side opposite to the incident side, the lens assembly comprising:

   a first polarization layer disposed adjacent to the incident side;
   a second polarization layer disposed between the first polarization layer and the exit side;
   a phase retardation layer disposed between the first polarization layer and the second polarization layer;
   wherein the phase retardation layer has a first phase retardation refractive index along a first direction, has a second phase retardation refractive index equal to the first phase retardation refractive index along a second direction, and has a third phase retardation refractive index along a third direction perpendicular to the first direction and the second direction, and
   wherein the first phase retardation refractive index and the second phase retardation refractive index are different from the third phase retardation refractive index.

2. The lens assembly of claim 1, wherein the lens assembly further comprises:

   a first quarter wave plate disposed between the second polarization layer and the exit side;
   a partially reflective mirror layer disposed between the first quarter wave plate and the exit side;
   a second quarter wave plate disposed between the partially reflective mirror layer and the exit side; and
   a third polarization layer disposed adjacent to the exit side.

3. The lens assembly of claim 1 or 2, wherein the phase retardation layer includes a material having refractive index anisotropy.

4. The lens assembly of claim 3, wherein the material having the refractive index anisotropy includes a discotic material or a liquid crystal material.

5. The lens assembly of claim any one of claims 1 to 4, wherein

the phase retardation layer has a phase retardation value ($R_{th}$) in a range of about 500 nm to about 1500 nm with respect to visible light, wherein the phase retardation value ($R_{th}$) of the phase retardation layer satisfies the following equation:

$$R_{th}=\{(N_X+N_Y)/2-N_Z\} \times d,$$

wherein
$N_X$ denotes the first phase retardation refractive index,
$N_Y$ denotes the second phase retardation refractive index,
$N_Z$ denotes the third phase retardation refractive index, and
d denotes a thickness of the phase retardation layer.

6. The lens assembly of claim 5, wherein each of the first to third phase retardation refractive indices is in a range of about 1.5 to about 1.9.

7. The lens assembly of claim 5 or 6, wherein

the phase retardation layer is arranged to change a polarization state of light incident in a direction different from the third direction, and the first direction and the second direction are directions on a plane on which the phase retardation layer is disposed.

8. The lens assembly of any one of claims 5 to 7, wherein
light transmission axes of the first polarization layer and the second polarization layer are parallel to each other.

9. The lens assembly of any one of claims 5 to 8, wherein
the first polarization layer is a linear polarization layer.

10. The lens assembly of any one of claims 5 to 9, wherein
the first polarization layer is in a film form.

11. The lens assembly of claim 10, wherein

the first polarization layer and the phase retardation layer are spaced apart from each other;

optionally wherein a material having a refractive index isotropy is disposed between the first polarization layer and the phase retardation layer.

12. The lens assembly of claim 11, further comprising:

an adhesive layer disposed between the first polarization layer and the phase retardation layer,
wherein the phase retardation layer is coupled to the first polarization layer through the adhesive layer.

13. The lens assembly of any one of claims 5 to 12, wherein
the phase retardation layer and the first polarization layer are in contact with each other.

14. The lens assembly of claim 13, wherein
the phase retardation layer is a layer formed on the first polarization layer through a coating or deposition process.

15. A display device comprising:

a display panel including a base layer disposed on a plane defined based on a first direction and a second direction different from the first direction, and a light emitting element disposed on the base layer; and
a lens assembly disposed on the display panel, wherein the lens assembly transmits light provided from the display panel, wherein the lens assembly is according to any one of claims 1 to 14.

# FIG. 1

OCP

DP

DD

DR3

# FIG. 2

PXL(SPX) : SPX1, SPX2, SPX3

# FIG. 3

OCP

S1

S2

A2

A1

D

DR4

DR3

POL3  QWP2  HFM  QWP1  POL2  RTHL  POL1

# FIG. 4

SLGT

LGT

FLGT

DR4

DR3

POL2    RTHL    POL1    DP

# FIG. 5A

# FIG. 5B

# FIG. 5C

# FIG. 5D

# FIG. 5E

# FIG. 5F

Transmittance
Unit: a.u

# FIG. 6

# FIG. 7

OCP'

101

POL3  QWP2  HFM  QWP1  POL2  RTHL'  POL1

DR4

DR3

# FIG. 8

OCP"

DR4

DR3

POL3 QWP2 HFM QWP1 POL2 RTHL" POL1

# FIG. 9

2000

2100

2200

# FIG. 10

1000

112

111b

10:15
Monday
Apr. 21

111a

$111\begin{cases} 111a \\ 111b \end{cases}$

# FIG. 11

ROCP  DP1          DP2  LOCP

DP: DP1, DP2
OCP: ROCP, LOCP

2000

2200

Europäisches
Patentamt

European
Patent Office

Office européen
des brevets

# EUROPEAN SEARCH REPORT

**Application Number**

EP 24 18 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/116912 A1 (SHARP GARY D [US] ET AL) 16 April 2020 (2020-04-16) | 1,3-15 | INV. G02B5/30 |
| Y | * paragraphs [0001] - [0068]; figures 1-16 * | 2 | G02B27/00 G02B27/01 |
| Y | US 2020/241312 A1 (MCGETTIGAN ANTHONY D [US] ET AL) 30 July 2020 (2020-07-30) * paragraphs [0001] - [0093]; figures 1-7 * | 2 | |
| Y | US 6 075 651 A (HOPPE MICHAEL [US]) 13 June 2000 (2000-06-13) * columns 1-6; figures 1-6 * | 2 | |
| Y | US 2018/101020 A1 (GOLLIER JACQUES [US] ET AL) 12 April 2018 (2018-04-12) * figures 1-4 * | 2 | |
| Y | US 6 271 969 B1 (MERTZ PIERRE H [US]) 7 August 2001 (2001-08-07) * figures 1-3 * | 2 | |

**TECHNICAL FIELDS SEARCHED (IPC)**

G02B

The present search report has been drawn up for all claims

| Place of search | Date of completion of the search | Examiner |
|---|---|---|
| Munich | 13 December 2024 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5449

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | | | Publication date | Patent family member(s) | | | Publication date |
|---|---|---|---|---|---|---|---|
| US | 2020116912 | A1 | 16-04-2020 | AU | 2019358207 | A1 | 13-05-2021 |
| | | | | CN | 113167951 | A | 23-07-2021 |
| | | | | EP | 3850407 | A2 | 21-07-2021 |
| | | | | JP | 2022504675 | A | 13-01-2022 |
| | | | | US | 2020116912 | A1 | 16-04-2020 |
| | | | | WO | 2020077319 | A2 | 16-04-2020 |
| US | 2020241312 | A1 | 30-07-2020 | US | 2020241312 | A1 | 30-07-2020 |
| | | | | WO | 2020072635 | A1 | 09-04-2020 |
| US | 6075651 | A | 13-06-2000 | AU | 2603800 | A | 18-08-2000 |
| | | | | EP | 1024388 | A2 | 02-08-2000 |
| | | | | JP | 2000275566 | A | 06-10-2000 |
| | | | | US | 6075651 | A | 13-06-2000 |
| | | | | WO | 0045212 | A1 | 03-08-2000 |
| US | 2018101020 | A1 | 12-04-2018 | NONE | | | |
| US | 6271969 | B1 | 07-08-2001 | DE | 69923152 | T2 | 22-12-2005 |
| | | | | EP | 1008886 | A1 | 14-06-2000 |
| | | | | JP | 4408159 | B2 | 03-02-2010 |
| | | | | JP | 2000180785 | A | 30-06-2000 |
| | | | | US | 6271969 | B1 | 07-08-2001 |

EPO FORM P0459

For more details about this annex : see Official Journal of the European Patent Office, No. 12/82